# EUROPÄISCHE PATENTSCHRIFT

(11) **EP 2 593 777 B1**
(45) Veröffentlichungstag und Bekanntmachung des Hinweises auf die Patenterteilung: **17.09.2014**
(21) Anmeldenummer: 11763577.1
(22) Anmeldetag: 12.07.2011
(51) Int. Cl.: G01N 25/72

(54) **VERFAHREN UND SYSTEM ZUR VORHERSAGE VON FEHLERN AN KOMPONENTEN ROTIERENDER MASCHINEN MIT THERMOGRAPHIE**
METHOD AND SYSTEM FOR PREDICTING ERRORS ON COMPONENTS OF ROTATING MACHINES BY THERMOGRAPHY
PROCÉDÉ ET SYSTÈME DE PRÉVISION DES DÉFAUTS SUR LES COMPOSANTS DES MACHINES EN ROTATION PAR THERMOGRAPHIE

(30) Priorität: 13.07.2010 DE 102010027072
(43) Veröffentlichungstag der Anmeldung: 22.05.2013
(73) Patentinhaber: Prüftechnik Dieter Busch AG, 85737 Ismaning (DE)
(72) Erfinder: HOELZL, Roland, 81369 München (DE)
(74) Vertreter: Epping - Hermann - Fischer
(86) Internationale Anmeldenummer: PCT/DE2011/001454
(87) Internationale Veröffentlichungsnummer: WO 2012/010154

(56) Entgegenhaltungen:
- US-A- 5 032 727
- US-A1- 2010 131 225
- "Condition monitoring and diagnostics of machines - Thermography - Part 1: General procedures" In: "DRAFT INTERNATIONAL STANDARD ISO", 1. Januar 2005 (2005-01-01), XP55012370, Seite 4 - Seite 23

## Beschreibung

Die Erfindung betrifft ein Verfahren und ein System, das mittels Thermographie zur Erkennung von Fehlausrichtung und zur Vorhersage von Fehlern an rotierenden Maschinen und ihren Komponenten dient.

Zur Vorhersage von Fehlern an rotierenden Maschinen und ihren Komponenten wie Lagern und der Ausrichtung von Motoren sind verschiedene Verfahren bekannt. Am einfachsten ist die visuelle Inspektion, bei der nach offensichtlichen Schäden gesucht wird. Solche Schäden sind Austritt von Öl oder Schmierfett oder sichtbare Lecks. Bei der visuellen Inspektion werden auch Füllstände von Vorratsbehältern, aber auch die Ansammlung von Material in Filtern kontrolliert.

Aus akustischen Inspektionen, die zum Teil mit einem Hörrohr durchgeführt werden, wurde die Schwingungsanalyse entwickelt. Dabei werden Schwingungssignale mit Mikrofonen oder Akzelerometern aufgenommen. Als Akzelerometer dienen meist Piezosensoren, die heute auch als MEMS- Bausteine ausgeführt werden. Aus dem Beschleunigungssignal der Akzelerometer kann durch ein- bzw. zweifache Integration ein Signal für Schwinggeschwindigkeit bzw. Verlagerung gewonnen werden. So wird der ursprüngliche Frequenzbereich der akustischen Inspektionen aus dem Hörbaren in den Ultraschall erweitert. Darüber hinaus können durch elektronische Weiterverarbeitung mathematische und digitale Verfahren bei der Auswertung der Daten der Schwingungsmessung eingesetzt werden, wie z.B. die Fourier-Analyse.

Ein weiteres Verfahren ist die Ölanalyse. Während dieses Verfahren relativ aussagekräftig ist, so ist es doch mit hohem Aufwand verbunden, weil einerseits die Entnahme einer Ölprobe notwendig ist und andererseits die Proben in ein Labor geschickt werden müssen, was einen hohen Zeitaufwand bedeutet.

Ein weiteres Verfahren, das in der Praxis zunehmend eingesetzt wird, ist die Thermographie. Hier wird mit einer Infrarotkamera ein Bild einer interessierenden Maschinenkomponente aufgenommen. Oft werden diesen Bildern auch Aufnahmen im sichtbaren Spektralbereich überlagert, die aus einer ähnlichen oder derselben Perspektive aufgenommen wurden, wobei z.B. die Infrarotkamera und die Kamera für den sichtbaren Spektralbereich in einem Gehäuse integriert sind. So wird in der US2009/0010635 eine solche Kamera mit einer Technik zur Überlagerung von Bildern aus dem sichtbaren und dem infraroten Spektralbereich beschrieben. Die Auswertung der Aufnahmen ist dem menschlichen Beobachter vorbehalten, der sich oft darauf beschränkt, besonders hervorstechende Temperaturwerte im Infrarotbild zu finden. Ein solches Verfahren ist hilfreich, um z.B. ein heiß gelaufenes Lager oder eine wegen Fehlausrichtung heiß gewordene Kupplung schnell zu orten und Maßnahmen einzuleiten. Ein solches Orten heiß gewordener Komponenten ist aber nur möglich, wenn ein menschlicher Beobachter die heiß gewordene Komponente im Infrarotbild richtig zuordnet. So erwähnt die US 7,706,596 in Spalte 5 in Z. 54-60, dass es nötig ist, dass für die Auswertung von lnfrarotbildern ein Betrachter über gewisse Fähigkeiten (,skills') verfügen muss.

Ansätze zur maschinellen Auswertung von Infrarotbildern werden im Patent US 7,528,372 beschrieben. Auch dort wird die Überlagerung von Infrarotbildern und Aufnahmen im sichtbaren Spektralbereich erwähnt. Ein mit Computern durchgeführter Vergleich von Thermographieaufnahmen ist in allgemeinen Begriffen als ,thermal performance algorithm' dargestellt. Zur konkreten Ausführung solcher Algorithmen ist wenig angegeben.

Solche Algorithmen können angewendet werden auf Thermographieaufnahmen, die in großen zeitlichen Abständen aufgenommen wurden, wie z.B. ein Bild einer neuen Maschine und ein Bild derselben Maschine nach längerem Betrieb. Probleme beim Auffinden solcher Algorithmen bereiten sich ändernde Umgebungsbedingungen, wie z. B. die Temperatur in der Fabrikhalle, in der die Maschine aufgestellt ist. Andere Probleme sind Änderungen der Betriebsbedingungen, die durch unterschiedliche Betriebszustände der Maschine entstehen oder auch dadurch, dass sich z.B. bei einer von einem Motor angetriebenen Pumpe die Temperatur des zu fördernden Mediums ändert.

Man behilft sich oft damit, künstlich Volllast eines zu beurteilenden Maschinensystems herbeizuführen, wenn das System der Erstinbetriebnahme oder einer Wartung unterzogen wurde, und dann ein Thermographiebild aufzunehmen. Zur Überprüfung der Maschine zu einem späteren Zeitpunkt wird wieder Volllast künstlich erzeugt und ein Thermographiebild aufgenommen. Diese beiden Thermographiebilder werden dann von erfahrenen Gutachtern verglichen. Dieses Verfahren ist wegen der künstlichen Herbeiführung der Volllast und der nicht uneingeschränkten Verfügbarkeit der Gutachter aufwändig und wenig zuverlässig. Es ist von der Erfahrung und dem Können des Gutachters abhängig, ob und inwieweit Parameter wie z. B. die Umgebungstemperatur oder die Menge und/oder Temperatur eines geförderten Mediums korrekt berücksichtigt werden.

Dokument "Condition monitoring and diagnostics of machines - Thermography - Part 1: General procedures" aus dem Draft International Standard ISO, 2005, beschreibt ein vergleichendes quantitatives Thermographieverfahren. Dabei wird ein Temperaturunterschied zwischen zwei Oberflächen, die identisch oder ähnlich sind, numerisch ermittelt.

Im Dokument US 2010/0131225 A1 ist ein System zur Detektion thermographischer Anomalien angegeben. Ein Basislinienprofil wird mit einem thermographischen Instrument gemessen und gespeichert. Anschließend wird ein Betriebsprofil gemessen und ein Differenzprofil zwischen dem Betriebsprofil und dem Basislinienprofil berechnet.

Aufgabe der Erfindung ist es nun, ein Verfahren und ein System bereitzustellen, das den Vergleich von Infrarotbildern von Komponenten rotierenden Maschinen ermöglicht, die zu verschiedenen Zeitpunkten aufgenommen wurden und einen konkreten Algorithmus zur Durchführung anzugeben.

Diese Aufgabe wird gelöst durch ein Verfahren nach Anspruch 1 und ein System nach Anspruch 13. Vorteilhafte Ausgestaltungen sind Gegenstand der Unteransprüche. Insbesondere wird die Aufgabe dadurch gelöst, dass ein Referenzzustand mit der Infrarotkamera in einem Bild erfasst wird und andererseits ein nach einer bestimmten Betriebsdauer aufgenommenes Bild mit diesem Referenzbild verglichen wird. Dabei wird der Vergleich nicht von einem Gutachter, sondern von einem Computersystem vorgenommen.

Oft können schon bei der Konstruktion einer Maschine Stellen oder Komponenten erkannt werden, die im späteren Betrieb besonderen Belastungen unterworfen sind und deshalb sorgfältig überwacht werden müssen. Darüber hinaus treten oft auch im Betrieb einer Maschine bei bestimmten Komponenten immer wieder Probleme auf, die es rechtfertigen, die jeweilige Komponente einer besonderen Überwachung zu unterziehen. Beispiele für solche Komponenten sind Kupplungen oder Wälzlager, z.B. für Wellen.

Kupplungen werden oft zwischen einem Motor und einer von diesem Motor angetriebenen Maschinenkomponente wie einem Gebläse oder einer Pumpe zur Förderung eines fluiden Mediums eingesetzt. Dabei spielt die geometrische Ausrichtung des Motors zu der Pumpe oder zu dem Gebläse eine erhebliche Rolle für die Belastung der Kupplung und der Lager der Wellen, die mit dieser Kupplung verbunden sind. Wenn die relative Ausrichtung des Motors zu der Pumpe oder zu dem Gebläse nicht korrekt durchgeführt wurde oder im Laufe der Zeit eine Verschiebung der beiden Komponenten auftritt, kann dies lange Zeit unbemerkt bleiben und zu katastrophalen Schäden führen. Es ist relativ aufwändig, in regelmäßigen Zeitabständen ein Ausrichtgerät an der Maschine anzubringen, weil dies im Normalfall nur bei Stillstand der Anlage möglich ist. Eine andauernde Überwachung des geometrischen Aussichtszustandes einer rotierenden Kupplung ist aufgrund der Anbringung des Ausrichtgerätes schwierig, weil diese Anbringung nur an nicht bewegten Komponenten der Maschine möglich ist. Um den Aufwand eines Maschinenstillstands zu vermeiden, der zur Überprüfung des Ausrichtzustandes erforderlich ist, werden erfindungsgemäß Thermographieaufnahmen vorgenommen. Eine Fehlausrichtung zeigt sich als Erwärmung eines Bereichs der Kupplung im Thermographiebild.

Gegenstand der Erfindung ist es, die unterschiedliche Erwärmung einzelner Komponenten maschinell, also mit einem Computer auszuwerten, wobei die Effekte, die unterschiedliche Betriebsparameter oder unterschiedliche Umgebungsbedingungen auf die Temperatur der jeweiligen Komponente haben, berücksichtigt werden. Um dies zu erreichen, wird nach der Inbetriebnahme einer neuen Maschine oder nach einer erfolgreichen Wartung mindestens ein Thermographiebild aufgenommen, das als Referenz dient. Bei der Auswahl der Ansicht ist darauf zu achten, dass Komponenten sichtbar sind, die besonderen Belastungen unterworfen sind, wie z.B. die oben erwähnten Kupplungen oder Lager. Aufgrund der Konstruktion der Maschine oder aufgrund von Erfahrungen mit früheren Wartungen dieser Maschine oder anderer Maschinen derselben Bauart werden diese Ansichten festgelegt. Bei der Festlegung der Ansichten ist es hilfreich, wenn der Hersteller der Maschine oder ihrer Komponenten die Daten einer thermischen Simulation zur Verfügung stellen, die insbesondere bei Serienprodukten oft durchgeführt wird. Es kann erforderlich sein, in Abdeckungen oder Gehäusen Bohrungen anzubringen, um das Objektiv oder die Objektive der Thermographiekamera, die mit einer Kamera für den sichtbaren Spektralbereich in einem Gehäuse untergebracht sein kann, so an der Maschine anzubringen, dass es möglich ist, die ausgewählten Ansichten aufzunehmen. Es ist auch vorteilhaft, nach der Festlegung einer Ansicht eine Befestigungsvorrichtung für die Kamera an dem für diese Ansicht gewählten Standort der Kamera anzubringen, sofern dies ohne Beeinträchtigung des Betriebs möglich ist. So wird sichergestellt, dass immer der gleiche Standort für die Aufnahme gewählt wird.

Nach der Auswahl der Ansichten werden in dem Referenzbild Wärmequellen und Wärmesenken identifiziert. Wärmesenken sind z.B. Fundamente oder in der jeweiligen Ansicht sichtbare Gegenstände, die in einer engen Beziehung zur Umgebungstemperatur stehen. Bei einem Lüfter ist dies z.B. auch das geförderte fluide Medium. Es ist auch möglich, im für die Kamera sichtbaren Bereich Marken oder Schilder anzubringen, die im Bild als Gegenstände, wie auf der Umgebungstemperatur liegen, sichtbar werden. Die Bildbereiche, auf denen Gegenstände sichtbar sind, die in einer engen Beziehung zur Umgebungstemperatur stehen und als Referenz dienen können, werden als kalte Orte bezeichnet.

Bei den Wärmequellen ist zu unterscheiden zwischen solchen Quellen, deren besondere Erwärmung bei Auftreten eines Problems überwacht werden soll, und solchen Quellen, die im normalen Betrieb schon eine erhöhte Temperatur aufweisen. Wärmequellen, die für den Fall des Auftretens eines Problems überwacht werden sollen, werden als erste heiße Orte bezeichnet. Beispiele für solche Erwärmungen sind Motorverluste, Reibung an der Kupplung und Lagerreibung. Im Normalbetrieb auftretende Wärmequellen, die wie kalte Orte als Referenz dienen können, werden als zweite heiße Orte bezeichnet. Wenn ein Lüfter oder eine Pumpe abgebildet wird, kann das geförderte fluide Medium sowohl Wärmequelle als auch Wärmesenke sein. Beispiele für erste heiße Orte sind also Lager, Kupplungen und Motoren

Bei der Festlegung der Wärmequellen und Wärmesenken sind also die im Bild auftretenden Wärmeströme zwischen diesen Quellen und Senken zu berücksichtigen. Damit werden dann die kalten, ersten heißen und zweiten heißen Orte anhand der Maschinenkomponenten identifiziert, denen sie zugeordnet sind. Bei der Festlegung der kalten, ersten heißen und zweiten heißen Orte ist eine thermische Simulation hilfreich, wie auch oben im Zusammenhang mit der Festlegung der Ansichten erwähnt. Im Referenzbild und im zu einem späteren Zeitpunkt aufgenommenen Thermographiebild werden dann die diesen Orten zugeordneten Pixel identifiziert, die im allgemeinen Gruppen von Pixeln sein werden.

Erfindungsgemäß wird nun durch Herstellen einer mathematischen Verknüpfung zwischen den Temperaturen einander entsprechender kalter Orte in dem Referenzbild und in einem zu einem späteren Zeitpunkt aufgenommenen Thermographiebild eine Beziehung zwischen diesen beiden Bildern im Sinne einer Normalisierung vermittelt. Ein menschlicher Betrachter ist bisher gerade deshalb zur Auswertung erforderlich, weil eine solche Normalisierung nicht vorgenommen wird. Wenn zum Beispiel alle Pixel des zu einem späteren Zeitpunkt bei höherer Umgebungstemperatur aufgenommenen Thermographiebilds in ihrer Temperatur um den Differenzbetrag zwischen den Temperaturen eines kalten Orts im Referenzbild und desselben kalten Orts im zum späteren Zeitpunkt aufgenommenen Bild verringert werden, wird eine solche Normalisierung in ihrer einfachsten Form erreicht. Die Genauigkeit einer solchen Normalisierung kann dadurch erhöht werden, dass die Temperaturen mehrerer kalter Orte berücksichtigt werden, also in die mathematische Verknüpfung eingehen. Zusätzlich können auch die Temperaturen zweiter heißer Orte - sowohl im Referenzbild als auch in einem zu einem späteren Zeitpunkt aufgenommenen Thermographiebild - in der mathematischen Verknüpfung berücksichtigt werden. Diese Temperaturen der zweiten heißen Orte können von Betriebsparametern abhängen, wie im Folgenden anhand der Fig. deutlich wird.

Zur Veranschaulichung wurde an einer Maschine die Abdeckung über dem Kupplungsbereich entfernt und zwei Thermographiebilder mit guter und schlechter Ausrichtung aufgenommen. Dabei wurde die Farbskala der Originalbilder in Grauwerte ungesetzt, wobei weiß der höchsten gemessenen Temperatur entspricht und schwarz der tiefsten gemessenen Temperatur.

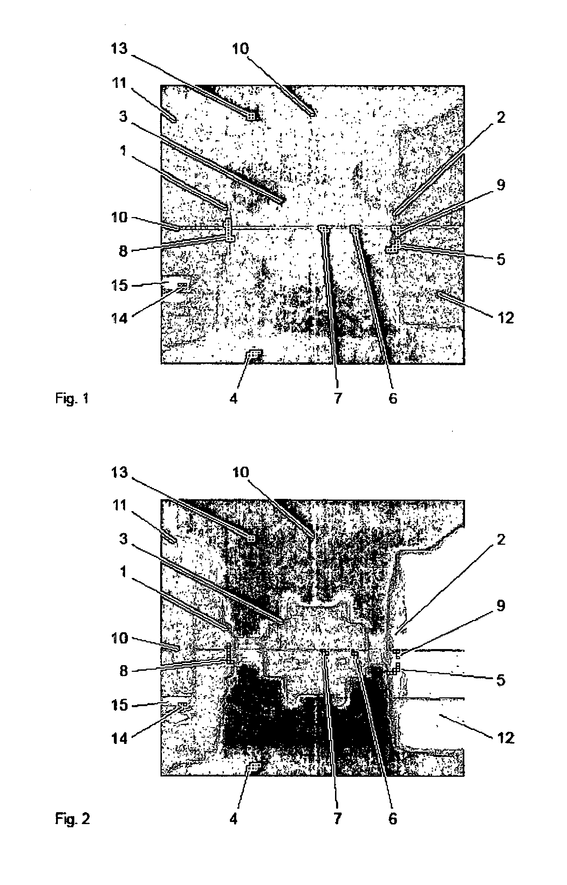

Fig. 1 enthält das Thermographiebild mit guter Ausrichtung und dient als Referenz. Links ist der Motor 11 erkennbar, rechts die angetriebene Pumpe 12 bzw. das angetriebene Gebläse. In dieser Aufnahme ist die Kupplung 3 nicht sehr deutlich erkennbar. In Fig. 2, die das Thermographiebild mit schlechter Ausrichtung enthält, sind alle relevanten Komponenten deutlich sichtbar. Die Welle des Motors ist am Motor auf der der Kupplung zugewandten Seite im Lager 1 gelagert, die Welle der angetriebenen Einheit im Lager 2. Die Kupplung, die die beiden Wellen verbindet, ist mit dem Bezugszeichen 3 versehen.

Auf der Bodenplatte, die relativ geringen thermischen Belastungen ausgesetzt ist, sind mehrere Pixel, die mit dem Bezugszeichen 4 versehen sind, gekennzeichnet. Diese Gruppe von Pixeln stellt einen Bereich dar, in dem eine Temperatur vorliegt, die nur wenig von der Temperatur der Umgebung abweicht oder sogar der Temperatur der Umgebungsluft entspricht. Dieser Bereich stellt also einen kalten Ort dar. Ein weiterer kalter Ort im Bildhintergrund wurde mit dem Bezugszeichen 13 versehen. Dabei kann es sich zum Beispiel um eine Wand des Raumes handeln, in dem die Messung stattfindet. In den mit 6 und 7 bezeichneten Bereichen der Kupplung 3 wurden mehrere Pixel als Bereiche festgelegt, in denen bei verstärkten mechanischen Belastungen eine Temperaturerhöhung auftritt. Solche Bereiche stellen erste heiße Orte dar. Im Lager 1 wurde ein weiterer erster heißer Ort mit der Ziffer 8 gekennzeichnet, im Lager 2 je ein erster heißer Ort mit Ziffer 5 und 9. Darüber hinaus ist ein weiterer am Motor 11 in Fig. 1 und Fig. 2 gleichermaßen erkennbarer zweiter heißer Ort mit dem Bezugszeichen 15 gekennzeichnet. An diesem zweiten heißen Ort 15 wurden einige Pixel 14 als heißer Referenzort festgelegt. Dieser heiße Ort 15 ist eine Öffnung des Motors 11, an dem eine erhöhte Temperatur auftritt. Diese Temperatur des heißen Orts 15 ist auch ein Maß für den Belastungszustand und die Leistungsaufnahme des Motors 11. Sie kann also direkt mit einem Betriebsparameter der Maschine in Bezug gesetzt werden.

In dem Objektiv der Thermographiekamera ist ein Fadenkreuz angebracht, das auf den Aufnahmen sichtbar ist und mit dem Bezugszeichen 10 gekennzeichnet ist. Mit diesem Fadenkreuz wurde die Verbindungslinie der beiden Wellen angepeilt. Die senkrechte Linie des Fadenkreuzes wurde durch den Sucher der Infrarotkamera auf die Mittellinie der Kupplung ausgerichtet. Je nach Ausführung der Kamera kann auch vorgesehen sein, dass anstelle eines Fadenkreuzes eine andere Visiermarke im Sucher der Kamera und in der Aufnahme sichtbar wird.

So kann zum Beispiel im Kameragehäuse ein Laser angeordnet sein, dessen Strahlrichtung der Blickrichtung des Objektivs der Kamera entspricht. Mit diesem Laser ist es möglich, dem Benutzer vorzugeben, einen bestimmten markanten Punkt auf der Maschine mit dem Laserstrahl anzuvisieren. Durch eine solche Visiermarke wird einerseits eine schnelle Sichtkontrolle möglich, ob der richtige Standpunkt für die Aufnahme gefunden wurde und andererseits wird bei korrekter Lage der Visiermarke auf dem Objekt die Zuordnung der einzelnen Bilder bei der Überlagerung erleichtert, sowohl für einen menschlichen Betrachter als auch für das Computersystem bei der Auswertung, insbesondere im Hinblick auf den erforderlichen Speicherplatz und den erforderlichen Rechenaufwand,

Ein Vergleich der Fig. 1 mit Fig. 2 zeigt, dass durch die Fehlausrichtung sowohl die Kupplung 3 als auch ihre Verbindungen mit den beiden Wellen erwärmt sind. Außerdem ist eine Erwärmung der Pumpe 12 sowie der beiden Lager 1 und 2 deutlich sichtbar. Um nun eine digitale Auswertung dieser beiden Bilder möglich zu machen, werden in diesen Bildern, die in zweckmäßiger Weise als digitale Aufnahmen angefertigt werden, verschiedene interessierende Bereiche festgelegt. Als Referenz dient dabei zunächst der kalte Ort 4, der in beiden Bildern identifiziert wird. In einem Computersystem wird die Temperatur des kalten Ortes 4 im Thermographiebild der Fig.2, das als erstes Thermographiebild bezeichnet wird, ermittelt. Ebenso wird die Temperatur des kalten Ortes 4 im als Referenz dienenden Thermographiebild der Fig.1 ermittelt, wenn dies nicht schon zu einem früheren Zeitpunkt durchgeführt wurde. Eine Normalisierung der Fig.2 in Bezug auf Fig.1 ist nun unter Zuhilfenahme einer mathematischen Verknüpfung dieser beiden Temperaturen möglich. So können die Temperaturen aller Pixel der Fig. 2 subtraktiv um die Temperaturdifferenz zwischen dem kalten Ort 4 in Fig. 1 und dem kalten Ort 4 in Fig. 2 verändert werden. Diese Temperaturdifferenz ermöglicht also eine Angleichung der Temperaturen von Fig.1 und Fig.2. Als Ergebnis dieser Normalisierung haben die in Fig.2 sichtbaren Maschinenkomponenten dieselbe Temperatur wie dieselben Maschinenkomponenten in Fig.1, wenn sie sich in vergleichbaren Zuständen befinden und nicht besonderen Belastungen unterworfen sind.

Wenn mindestens ein weiterer kalter Ort 13 festgelegt wurde, ist es möglich, in der mathematischen Verknüpfung die Temperaturdifferenz über mehrere kalte Orte zu mitteln. Es kann außerdem sinnvoll sein, auch einen oder mehrere zweite heiße Orte 15 als Referenz vorzusehen. Ausgehend von dieser Referenz oder diesen Referenzen wird nun mittels eines mathematischen Verfahrens der Vergleich des zu einem späteren Zeitpunkt aufgenommenen Thermographiebilds der Fig. 2 mit dem Referenzbild der Fig.1 durchgeführt.

Eine solche Normalisierung von zu verschiedenen Zeiten unter unterschiedlichen Umwelt-und Betriebsbedingungen aufgenommenen Thermographiebildern wird erfindungsgemäß in einem Computersystem durchgeführt. Einerseits ist es möglich, Thermographiebilder und ggf. Bilder aus dem sichtbaren Spektralbereich aus der Kamera in einen Computer zu übertragen, der auch ein Laptop, Notebook, Handheld oder Mobiltelefon sein kann. Andererseits kann dieser Computer auch in ein entsprechendes Kamerasystem integriert sein. Dabei kann dieses Kamerasystem nur eine Infrarotkamera beinhalten. Es ist aber auch möglich, dass das Kamerasystem sowohl eine Infrarotkamera als auch eine Kamera für den sichtbaren Spektralbereich enthält.

Erfindungsgemäß ist dieses Computersystem mit einer Datenbank ausgestattet, in der Thermographiebilder hinterlegt werden. In diese Datenbank werden auch weitere Daten aufgenommen. Zu diesen Daten gehören Bilder aus dem sichtbaren Spektralbereich, Betriebsparameter der Maschine und ihrer Komponenten, Umgebungstemperaturen und Kennzahlen der Maschine und ihrer Komponenten. Zusammen mit diesen Daten und den Aufnahmen werden auch die Zeitpunkte hinterlegt, an denen diese Daten erhoben wurden.

Die Normalisierung der einzelnen Thermographiebilder anhand der entsprechenden Referenzen wird erfindungsgemäß durch eine mathematische Verknüpfung der Temperaturen dieser Orte vermittelt. Im einfachsten Fall ist diese mathematische Verknüpfung subtraktiv, wobei die Temperaturdifferenz der kalten Orte 4 in Fig.1 und Fig.2 abgezogen wird.

Wenn in dem Referenzbild auch ein zweiter heißer Ort als Referenz festgelegt wurde, ergibt sich eine sinnvolle mathematische Verknüpfung unter Einbeziehung der Temperaturdifferenz der zweiten heißen Orte, je in Fig.1 und Fig.2 und der Temperaturdifferenz der kalten Orte, wieder je in Fig. 1 und Fig. 2. Der Quotient dieser Temperaturdifferenzen kann nun seinerseits auf die Temperatur des kalten Orts in Fig. 2, der Referenz, normalisiert sein.

Ebenso ist es möglich, in jedem der Bilder Fig.1 und Fig. 2 die Temperaturdifferenzen zwischen zweiten heißen Ort und kaltem Ort für jedes der Bilder einzeln zu bestimmen und den Quotienten dieser Temperaturdifferenzen zu bilden. Wieder ist eine Normalisierung auf die Temperatur des kalten Orts in Fig.2 möglich.

In einer Ausgestaltung der Erfindung werden die zu einem späteren Zeitpunkt aufgenommenen Bilder der Fig.1 durch die mathematische Verknüpfung in jedem einzelnen Pixel auf das Referenzbild normalisiert.

In einer besonders vorteilhaften Ausgestaltung der Erfindung wird eine solche Normalisierung nur für ausgewählte Bereiche vorgenommen, die zum Beispiel bei der Festlegung der Ansichten bereits mit ausgewählt wurden.

Über die Bildung von Differenzen und Quotienten zwischen den einzelnen Temperaturen hinaus sind auch weitere Beziehungen in der mathematischen Verknüpfung sinnvoll. Vorteilhaft ist dabei der funktionale Zusammenhang zwischen der Umgebungstemperatur und dem kalten Ort oder den kalten Orten. Günstig ist auch, wenn die funktionale Abhängigkeit der Temperatur des zweiten heißen Orts von einem oder mehreren Betriebsparametern der Maschine in die mathematische Verknüpfung eingeht. Eine solche funktionale Abhängigkeit besteht zum Beispiel zwischen der Temperatur des heißen Orts 15 und der Leistungsaufnahme des Motors 11. Weitere funktionale Abhängigkeiten bestehen zum Beispiel in Bezug auf die Drehzahl des Motors 11 bzw. der Pumpe 2, sowie die Temperatur und/oder die Menge des mit der Pumpe 2 geförderten Mediums. Ebenso können natürlich die Emissivitäten der abgebildeten Oberflächen in die beobachteten Temperaturen eingehen und in der mathematischen Verknüpfung berücksichtigt werden. Diese Emissivitäten können sich zum Beispiel durch Ablagerungen auf der betrachteten Komponente ändern.

In dem vorangegangenen Text wurden einige Beispiele für Betriebsparameter genannt, wie die Leistungsaufnahme des Motors. Es versteht sich, dass diese Leistungsaufnahme nur ein Beispiel für eine Vielzahl möglicher Betriebsparameter ist, wie auch die genannte Temperatur des geförderten Mediums. Für leitende Elemente wie Sicherungen kann die Stromaufnahme ein solcher Parameter sein. Bei bewegten Maschinenelementen kann die vorhandene Menge an Schmierstoff ein weiterer Parameter sein. Ebenso sind die erwähnten Kupplungen und Lager nur als Beispiele für Maschinenkomponenten zu sehen.

Es ist nun sinnvoll, die Datenbank mit mehreren hinterlegten Thermographiebildern und den zugehörigen Betriebsparametern auszuwerten, um empirisch den Zusammenhang zwischen Betriebsparametern und den Temperaturwerten der hinterlegten kalten bzw. heißen Orte zu finden. Darüber hinaus kann bei Vorliegen eines Defekts oder einer Fehlausrichtung vor und nach der Beseitigung dieses Defekts oder der Fehlausrichtung je ein Thermographiebild aufgenommen, in der Datenbank hinterlegt und danach mit den zugehörigen Betriebsparametern korreliert werden. Das Ergebnis dieser Auswertung wird nun in der Datenbank hinterlegt. So entstehen im Laufe der Zeit umfangreiche Datenbanken, die es ermöglichen, bei Vorliegen eines neu aufgenommenen Thermographiebilds Aussagen zu treffen, ob ein Schaden vorliegt, wenn ja, welcher Art dieser Schaden ist, oder ob sich ein neuer Schaden und/oder eine neue Fehlausrichtung anbahnt. Damit wird eine Einbindung dieser Erfindung in einen prädiktiven Wartungsplan möglich. Zusätzlich werden die Diagnosemaßnahmen in diesem Wartungsplan vereinfacht, weil eine Thermographieaufnahme schnell und leicht zu erstellen ist, während eine Schwingungsmessung und deren Auswertung oder eine neue Ausrichtung der Maschinenkomponenten nur dann vorgenommen werden müssen, wenn sich im Thermographiebild eine Auffälligkeit zeigt.

Wenn die Bilder in der Datenbank im Computersystem hinterlegt werden, ist es sinnvoll, die Bilddaten so zu bearbeiten, dass für mehrere Bilder ein gemeinsamer Standpunkt des Beobachters festgelegt wird. Einzelne Bilder werden also so korrigiert, dass immer Bilder entstehen, auf denen dieselben Gegenstände an denselben Orten erscheinen. Somit können die Pixel oder Pixelgruppen, die für die kalten und heißen Orte hinterlegt sind, an denselben Orten in den einzelnen Bildern lokalisiert sein. So sind sie einer mathematischen Auswertung leichter zugänglich. Auch der Bedarf an Speicherplatz für die Datenbank wird dadurch reduziert.

Eine solche Art der Speicherung ist besonders dann von Vorteil, wenn Bilder verschiedener Auflösung miteinander kombiniert werden sollen. Bilder verschiedener Auflösung können entstehen, wenn einerseits verschiedene Kameratypen für die Thermographiebilder verwendet werden oder wenn eine Thermographiekamera zusammen mit einer Kamera für den sichtbaren Spektralbereich verwendet wird.

Es ist nicht erforderlich, die Datenbank für die Thermographiebilder in der Kamera selbst und in einem speziellen Computersystem zu hinterlegen, obwohl dies selbstverständlich eine Ausführungsform der Erfindung ist. Es ist auch möglich, eine in der Steuerung der Maschine oder im Leitstand mehrerer Maschinen vorhandene Datenbank dahingehend zu erweitern, dass die mit der Erfindung zusätzlich erhobenen Daten dort hinterlegt werden können. Eine solche Ausgestaltung der Erfindung ist besonders vorteilhaft, weil in einer vorhandenen Datenbank bereits Betriebsdaten wie einzelne Betriebsparameter hinterlegt sind. Diese einzelnen Betriebsparameter können zum Beispiel die Stromaufnahme des Motors oder die Drehzahl der Pumpe sein.

Es ist von besonderem Vorteil, wenn solche überlagerten Bilder, die außer dem infraroten auch den sichtbaren Spektralbereich umfassen können, nach erfolgter Normalisierung in einer Falschfarbendarstellung auf der Anzeige des Computersystems wiedergegeben werden. Es wird mittels der mathematischen Verknüpfung ein neues Gesamtbild erzeugt. So erscheinen Komponenten, die besonderer Aufmerksamkeit bedürfen, besonders hervorgehoben. Darüber hinaus ist es möglich, eine Temperaturabweichung einer bestimmten Komponente mit einem bestimmten Typ von Defekt zu verbinden. Eine erwärmte Kupplung in Zusammenhang mit erwärmten Lagern deutet wie in den Fig. auf eine Fehlausrichtung hin, so dass bei Vorliegen einer erwärmten Kupplung und erwärmter Lager eine zusätzliche Anzeige, zum Beispiel in Textform oder als Sprachausgabe erfolgen kann, die darauf hinweist, dass nun die Ausrichtung des Motors zur Pumpe oder zum Gebläse überprüft und gegebenenfalls korrigiert werden soll. Entsprechend ist eine andere Anzeige oder Sprachausgabe sinnvoll, die bei Erwärmung eines Lagers auf einen bevorstehenden Lagerschaden hinweist, wenn die Kupplung nicht erwärmt ist. Diese Anzeige oder Sprachausgabe beinhaltet Korrekturanweisungen, die zum Beispiel die Überprüfung des Schmiermittelvorrats oder eine vorzunehmende Schwingungsmessung sein können. In einem dritten Fall, wenn nur die Kupplung, aber nicht die Lager erwärmt sind, liegt sehr wahrscheinlich nur ein Schaden an der Kupplung vor. Die entsprechende Anzeige oder Sprachausgabe empfiehlt dann einen Austausch der Kupplung beim nächsten Maschinenstillstand.

Ein besonderer Vorteil der Erfindung liegt darin, dass eine überlagerte Darstellung von Thermographiebildern und Bildern im sichtbaren Spektralbereich, in der in der beschriebenen Weise problembehaftete Komponenten besonders hervorgehoben sind, eine besonders anschauliche Wiedergabe des Maschinenzustands ermöglicht.

Aufgrund von Konstruktionsdaten oder Simulationsdaten, wie sie ein Hersteller eines Lüfters oder einer Pumpe in seinem CAD-System bei der Konstruktion der Maschine ermittelt, können auch die ersten heißen Orte bereits nach der Festlegung der weiter oben erwähnten Ansichten für die Aufnahmen, in dem zu erwartenden Thermographiebild festgelegt werden und zusammen mit Kennzahlen der zugeordneten Maschinenkomponenten in der Datenbank gespeichert werden.

In einer vorteilhaften Ausgestaltung der Erfindung werden bei der Festlegung der Ansichten bereits alle sichtbaren Komponenten der Maschine identifiziert und zugehörige Daten in der Datenbank hinterlegt. So kann bei der Auswertung der Datenbank und neu aufgenommener Thermographiebilder der Computer bzw. die Software zur Auswertung anhand hinterlegter Daten von Maschinenkomponenten bei Sichtbarwerden eines neuen ersten heißen Orts im Thermographiebild selbst die betroffene Komponente identifizieren, ohne dass ein Eingriff eines menschlichen Beobachters nötig wäre.

Eine vorteilhafte Anwendung der Erfindung ist thermisches Wachstum. Es gilt allgemein als schwierig, die Ausrichtung z.B. einer Einheit aus Motor und Pumpe korrekt vorzunehmen, da diese Ausrichtung üblicherweise in kaltem Zustand erfolgt. Wenn die Maschine ihren normalen Betriebszustand mit erhöhten Temperaturen von Motor und Pumpe erreicht, verändert sich die relative Positionierung des Motors zu der Pumpe, da Motor und Pumpe im Normalfall unterschiedlichen thermischen Ausdehnungen unterliegen. Die Ermittlung eines günstigen Ausrichtzustandes wird nun dadurch erleichtert, dass in einem Thermographiebild erhöhte Temperaturen an Kupplung und Lagern leicht sichtbar und der Computerauswertung zugänglich werden. So können z.B. bei Testläufen bei einem Hersteller einer solchen Kombination von Motor und Pumpe verschiedene Ausrichtzustände bei kalter Maschine eingestellt werden. In jedem Ausrichtzustand wird die Maschine in Betrieb gesetzt und eine Thermographieaufnahme vorgenommen. Mit der Erfindung ist es nun möglich, computergestützt anhand der Thermographiebilder denjenigen Ausrichtzustand zu ermitteln, bei dem die Erwärmung von Kupplung und Lagern am geringsten ist. Am endgültigen Standort der Maschine ist es erfindungsgemäß möglich, anhand von Thermographieaufnahmen einen bestimmten Betriebszustand einen Ausrichtungsstand zu ermitteln, in dem die Erwärmung von Kupplung und Lagern am geringsten ist. Dieser bestimmte Betriebszustand kann z. B. der am häufigsten auftretende sein. Die Erfindung ermöglicht auch eine einfache Kontrolle des Erfolges einer Ausrichtmaßnahme oder den Vergleich des Ausrichtzustands bei verschiedenen Betriebszuständen.

In einer weiteren sinnvollen Ausgestaltung der Erfindung ist es möglich, in regelmäßigen Zeitabständen, z.B. stündlich je ein Thermographiebild aufzunehmen. Dafür kann die Thermographiekamera zwischen den Aufnahmezeitpunkten an der weiter oben erwähnten Befestigungsvorrichtung verbleiben. Aus einer solchen Sammlung von Thermographiebildern können nun unter Zuhilfenahme der mit abgespeicherten Betriebsparameter und Aufnahmezeitpunkte kritische Zustände oder sich anbahnende Fehler computergestützt ermittelt werden.

## Patentansprüche

1. Verfahren zum Ermitteln des Zustandes von Komponenten einer Maschine durch Auswertung von Thermographiebildern,
wobei mindestens ein erstes Thermographiebild mit mindestens einem als Referenz dienenden weiteren Thermographiebild verglichen wird,
wobei in dem mindestens einem ersten Thermographiebild und dem mindestens einen als Referenz dienenden weiteren Thermographiebild je mindestens einem ersten Pixel oder je mindestens einer ersten Gruppe von Pixeln mindestens ein kalter Ort zugeordnet wird,
wobei mit dem Ergebnis einer mathematischen Verknüpfung der Temperaturen des mindestens einen kalten Orts in dem ersten Thermographiebild und dem mindestens einen als Referenz dienenden weiteren Thermographiebild eine Normalisierung des mindestens einen ersten Thermographiebilds durchgeführt wird,
wobei nach der Normalisierung in dem mindestens einen ersten Thermographiebild mindestens ein zweites Pixel oder mindestens eine zweite Gruppe von Pixeln als mindestens ein erster heißer Ort im Vergleich zum mindestens einen als Referenz dienenden weiteren Thermographiebild identifiziert wird, der einer bestimmten Maschinenkomponente zugeordnet wird.

2. Verfahren nach Anspruch 1, wobei für die mindestens eine Maschinenkomponente, die einem ersten heißen Ort zugeordnet wurde, eine Aussage über den Zustand der Maschinenkomponente getroffen wird.

3. Verfahren nach Anspruch 1 oder 2, wobei in dem mindestens einen ersten Thermographiebild und dem mindestens einen als Referenz dienenden weiteren Thermographiebild je mindestens einem dritten Pixel oder je mindestens einer dritten Gruppe von Pixeln mindestens ein zweiter heißer Ort zugeordnet wird, dessen Temperatur eine Aussage über einen Betriebsparameter der Maschine ermöglicht
und wobei die Temperatur des mindestens einen zweiten heißen Orts in die mathematische Verknüpfung der Temperaturen des mindestens einen kalten Orts in dem ersten Thermographiebild und dem mindestens einen als Referenz dienenden weiteren Thermographiebild eingeht.

4. Verfahren nach einem der vorhergehenden Ansprüche, wobei die Umgebungstemperatur in die mathematische Verknüpfung der Temperaturen des mindestens einen kalten Orts in dem ersten Thermographiebild und dem mindestens einen als Referenz dienenden weiteren Thermographiebild eingeht.

5. Verfahren nach einem der vorhergehenden Ansprüche, wobei Betriebsparameter der Maschine in die mathematische Verknüpfung eingehen.

6. Verfahren nach einem der vorhergehenden Ansprüche, wobei das erste Thermographiebild und das mindestens eine als Referenz dienende Thermographiebild vor der Zuordnung der Pixel oder Gruppen von Pixeln zu den kalten bzw. heißen Orten so überlagert werden, dass kalte und heiße Orte auf diesen Bildern zur Deckung kommen.

7. Verfahren nach Anspruch 6, wobei bei der Überlagerung des ersten Thermographiebilds und des mindestens einen als Referenz dienenden Thermographiebilds zusätzlich ein Bild aus dem sichtbaren Spektralbereich überlagert wird und/oder bei der Überlagerung des ersten Thermographiebilds und des mindestens einen als Referenz dienenden Thermographiebilds eine Visiermarke berücksichtigt wird.

8. Verfahren nach Anspruch 7, wobei die Visiermarke mit einem Laserstrahl erzeugt wird oder durch ein Fadenkreuz erzeugt wird.

9. Verfahren nach einem der vorhergehenden Ansprüche, wobei als Maschinenkomponente eine Kupplung verwendet wird, die zwei Wellen miteinander verbindet,
und/oder ein Wälzlager verwendet wird.

10. Verfahren nach einem der vorhergehenden Ansprüche, wobei in einer Datenbank Referenzwerte für kalte und heiße Orte, Betriebsparameter, Umgebungstemperaturen und/oder Zustandsgrößen der jeweiligen Maschinenkomponenten und/oder Emissivitäten der Oberflächen der jeweiligen Maschinenkomponenten hinterlegt werden.

11. Verfahren nach Anspruch 10, wobei in der Datenbank weitere Thermographiebilder und Bilder aus dem sichtbaren Spektralbereich hinterlegt werden.

12. Verfahren nach Anspruch 11, wobei die Ergebnisse der mathematischen Verknüpfung und die in der Datenbank hinterlegten Bilder überlagert werden und das Ergebnis dieser Überlagerung dem Benutzer als Ergebnisbild angezeigt wird.

13. System eingerichtet zur Durchführung des Verfahrens nach einem der Ansprüche 1-12, beinhaltend eine Thermographiekamera,
ein Computersystem,
eine Datenbank, in der Bilder der Thermographiekamera hinterlegt werden,
eine auf dem Computersystem implementierte Software zur Durchführung der mathematischen Verknüpfung
und eine Anzeige für das Ergebnis der mathematischen Verknüpfung.

14. System nach Anspruch 13, beinhaltend
eine Kamera für den sichtbaren Spektralbereich.

15. System nach Anspruch 13 oder 14, wobei die Software die Anzeige des Ergebnisses der mathematischen Verknüpfung in Form einer Überlagerung mehrerer Thermographiebilder und/oder, sofern rückbezogen auf Anspruch 14, eine Überlagerung mit einem Bild aus dem sichtbaren Spektralbereich vornimmt.

## Claims

1. Method for determining the state of components of a machine by thermographic imaging,
in which at least one first thermographic image is compared with at least one further thermographic image serving as reference,
in which in the at least one first thermographic image and the at least one further thermographic image serving as reference, at least one cold location is respectively assigned to at least one first pixel or at least one first group of pixels, a normalization of at least one first thermographic image being carried out using the result of a mathematical combination of the temperatures of the at least one cold location in the first thermographic image and the at least one further thermographic image serving as reference,
in which, after the normalization in the at least one first thermographic image at least one second pixel or at least one second group of pixels is identified as at least one first hot location in comparison with at least one further thermographic image serving as reference, which is assigned to a specific machine component.

2. Method according to Claim 1, in which a statement relating to the state of the machine component is confirmed for at least one machine component which has been assigned to a first hot location.

3. Method according to Claim 1 or 2, in which in the at least one first thermographic image and the at least one further thermographic image serving as reference, at least one second hot location is respectively assigned to at least one third pixel or at least one third group of pixels, the temperature of said hot location facilitating a statement relating to an operating parameter of the machine, and in which the temperature of the at least one second hot location is included in the mathematical combination of the temperatures of the at least one cold location in the first thermographic image and the at least one further thermographic image serving as reference.

4. Method according to one of the preceding claims, in which the ambient temperature is included in the mathematical combination of the temperatures of the at least one cold location in the first thermographic image and the at least one further thermographic image serving as reference.

5. Method according to one of the preceding claims, in which operating parameters of the machine are included in the mathematical combination.

6. Method according to one of the preceding claims, in which the first thermographic image and the at least one thermographic image serving as reference are superimposed before the assignment of the pixel or groups of pixels to the cold and hot locations, respectively, in such a way that cold and hot locations coincide on these images.

7. Method according to Claim 6, in which during the superimposition of the first thermographic image and the at least one thermographic image serving as reference an image from the visible spectral region is additionally superimposed and/or a sighting mark is taken into account during the superimposition of the first thermographic image and of the at least one thermographic image serving as reference.

8. Method according to Claim 7, in which the sighting mark is produced by a laser beam or is produced by reticle.

9. Method according to one of the preceding claims, in which use is made as machine component of a coupling which interconnects two shafts, and/or of a rolling bearing.

10. Method according to one of the preceding claims, in which a database stores reference values for cold and hot locations, operating parameters, ambient state temperatures and/or variables of the respective machine components and/or emissivity of the surfaces of the respective machine components.

11. Method according to Claim 10, in which further thermographic images and images from the visible spectral region are stored in the database.

12. Method according to Claim 11, in which the results of the mathematical combination and the images stored in the database are superimposed, and the result of said superimposition is disclosed to the user as result image.

13. System set up to carry out the method according to one of Claims 1-12, including
a thermographic camera,
a computer system,
a database in which images of the thermographic camera are stored,
software, executed on the computer system, for carrying out the mathematical combination,
and a display for the result of the mathematical combination.

14. System according to Claim 13, including a camera for the visible spectral region.

15. System according to Claim 13 or 14, in which the software displays the result of the mathematical combination in the form of a superimposition of a plurality of thermographic images and/or, to the extent that it relates back to Claim 14, carries out a superimposition with an image from the visible spectral region.

## Revendications

1. Procédé de détermination de l'état de composants d'une machine par évaluation d'images thermographiques,
au moins une première image thermographique étant comparée avec au moins une image thermographique supplémentaire servant de référence,
au moins un premier pixel ou au moins un premier groupe de pixels étant respectivement associé à au moins un endroit froid dans l'au moins une première image thermographique et dans l'au moins une image thermographique supplémentaire servant de référence,
une normalisation de l'au moins une première image thermographique étant effectuée avec le résultat d'une combinaison mathématique des températures de l'au moins un endroit froid dans la première image thermographique et dans avec l'au moins une image thermographique supplémentaire servant de référence,
après la normalisation, au moins un deuxième pixel ou au moins un deuxième groupe de pixels étant identifié dans l'au moins une première image thermographique en tant qu'au moins un premier endroit chaud en comparaison avec l'au moins une image thermographique supplémentaire servant de référence, lequel est associé à un composant de machine spécifique.

2. Procédé selon la revendication 1, selon lequel un renseignement sur l'état du composant de machine est obtenu pour l'au moins un composant de machine qui a été associé à un premier endroit chaud.

3. Procédé selon la revendication 1 ou 2, selon lequel au moins un troisième pixel ou au moins un troisième groupe de pixels dans l'au moins une première image thermographique et dans l'au moins une image thermographique supplémentaire servant de référence est respectivement associé à au moins un deuxième endroit chaud dont la température permet d'obtenir un renseignement sur un paramètre de fonctionnement de la machine,
et selon lequel la température de l'au moins un deuxième endroit chaud intervient dans la combinaison mathématique des températures de l'au moins un endroit froid dans la première image thermographique et dans l'au moins une image thermographique supplémentaire servant de référence.

4. Procédé selon l'une des revendications précédentes, selon lequel la température ambiante intervient dans la combinaison mathématique des températures de l'au moins un endroit froid dans la première image thermographique et dans l'au moins une image thermographique supplémentaire servant de référence.

5. Procédé selon l'une des revendications précédentes, selon lequel des paramètres de fonctionnement de la machine interviennent dans la combinaison mathématique.

6. Procédé selon l'une des revendications précédentes, selon lequel la première image thermographique et l'au moins une image thermographique servant de référence, avant l'association des pixels ou des groupes de pixels aux endroits froids ou chauds, sont superposées de telle sorte que les endroits froids et chauds sur ces images se recouvrent.

7. Procédé selon la revendication 6, selon lequel une image issue de la plage spectrale visible est en plus superposée lors de la superposition de la première image thermographique et de l'au moins une image thermographique servant de référence et/ou un repère de visée est pris en compte lors de la superposition de la première image thermographique et de l'au moins une image thermographique servant de référence.

8. Procédé selon la revendication 7, selon lequel le repère de visée est généré avec un rayon laser ou généré par un réticule.

9. Procédé selon l'une des revendications précédentes, selon lequel le composant de machine utilisé est un accouplement qui relie ensemble deux arbres et/ou un palier à roulement.

10. Procédé selon l'une des revendications précédentes, selon lequel des valeurs de référence pour les endroits froids et chauds, les paramètres de fonctionnement, les températures ambiantes et/ou des grandeurs d'état des composants de machine respectifs et/ou des facteurs d'émission des surfaces des composants de machine respectifs sont stockées dans une base de données.

11. Procédé selon la revendication 10, selon lequel des images thermographiques supplémentaires ainsi que des images issues de la plage spectrale visible sont stockées dans la base de données.

12. Procédé selon la revendication 11, selon lequel les résultats de la combinaison mathématique et les images stockées dans la base de données sont superposés et le résultat de cette superposition est affiché à l'utilisateur en tant qu'image résultante.

13. Système conçu pour mettre en oeuvre le procédé selon l'une des revendications 1 à 12, comprenant une caméra thermographique,
un système informatique,
une base de données dans laquelle sont stockées des images de la caméra thermographique,
un logiciel exécuté sur le système informatique pour réaliser la combinaison mathématique
et un afficheur pour le résultat de la combinaison mathématique.

14. Système selon la revendication 13, comprenant une caméra pour la plage spectrale visible.

15. Système selon la revendication 13 ou 14, avec lequel le logiciel effectue l'affichage du résultat de la combinaison mathématique sous la forme d'une superposition de plusieurs images thermographiques et/ou, dans la mesure où il est fait référence à la revendication 14, une superposition avec une image de la plage spectrale visible.
